# EUROPEAN PATENT APPLICATION

(11) **EP 2 017 694 A1**
(43) Date of publication of application: **21.01.2009**
(21) Application number: 07112090.1
(22) Date of filing: 09.07.2007
(51) Int. Cl.: G06F 3/02

(54) **Keyboard for an electronic device, input device for an electronic device, electronic device and method for illuminating keys of an electronic device**

(71) Applicant: Vodafone Holding GmbH, 40213 Düsseldorf (DE)
(72) Inventor: Childs, Robert, Sydney 2125 (AU)
(74) Representative: Müller, Thomas

(57) **Abstract**

The present invention relates to keyboard for an electronic device, comprising a plurality of illuminateable keys, wherein each key is linked to at least one function, and wherein the keyboard has at least one illuminating device for selectively emitting at least one out of two or more colours, said illuminating device being adapted for illuminating one or simultaneously two or more keys of said keyboard (1). The invention further relates to an input device for an electronic device, whereby the input divide has such a keyboard (1) and a control unit for controlling said at least one illuminating device. The invention relates further to an electronic device and to a method for illuminating keys of an electronic device, comprising a number of illuminateable keys.

## Description

The present invention relates to a keyboard for an electronic device, comprising a number of illuminateable keys, wherein each key is linked to at least one function. The invention further relates to an input device for an electronic device, to an electronic device and to a method for illuminating keys of an electronic device, comprising a number of illuminateable keys, wherein each key is linked to at least one function. Furthermore the invention relates to an electronic device with such a keyboard and such an input device, respectively, and to method for illuminating keys of an electronic device, comprising a number of illuminateable keys, wherein each key is linked to at least one function.

Many people have difficulties with modern keyboards, in particular modern mobile handset keyboards, because to keys of the keyboards are very small or the distance between two adjacent keys is very small. Therefore it often happens that the user of the keyboard pushes the wrong key. This is particularly the case with the elderly, or people with arthritis, Parkinson's disease or other diseases.

Modern keyboards are increasingly sophisticated in the way they can backlight keys of the keyboard. The German utility model DE 20 2004 001 351 U1 for example shows a device for backlight illumination of a keyboard with several keys. The unexamined German patent application De 10 2005 053 766 A1 offers a single input device with contextual character display. Preferably, the input device is a keypad, for example the keypad of a mobile telephone, and has a plurality of keys. Particularly preferably, each of the keys is provided with at least two different characters, which means that the overall size of the input device may advantageously be made small. This is because this measure means that it is not necessary to provide a key for each individual character. A small overall size for the input device is desirable in the case of a mobile telephone, for example, which needs to be particularly handy, that is to say small and lightweight.
The disadvantage of these known illuminated keyboards is that a user has to press a special key to execute a wanted or desired function. Because of the small dimensions of the keys and the small distance between two adjacent keys, in particular the keys of a mobile phone keyboard, a user has often difficulties to press the right button.

The aim of the invention is to make the operating of a keyboard of an electronic device or an input device with a keyboard of an electronic device and therefore of an electronic device easier for a user. The problem to be solved by the present invention is therefore to provide a keyboard for an electronic device, an input device for an electronic device, an electronic device and a method for illuminating keys of an electronic device, which makes the pressing of the correct key easy for a user.

The problem is solved by a keyboard according to independent claim 1, by an input device according to independent claim 2, by electronic devices according to independent claims 5 and 6 and by a method according to independent claim 8. Further features and advantageous embodiments will become apparent from the dependent claims and the description. Advantages and features described with respect to the keyboard according to independent claim 1 can also apply to the input device according to independent claim 2, to the electronic devices according to independent claim 5 and 6 and to the method according to independent claim 8 and vice versa.

The present invention is based on the finding, that the problem can be solved by an illuminating device for selectively emitting at least one out of two or more colours, said illuminating device being adapted for illuminating one or simultaneously two or more keys.

According to a first aspect the problem is solved by a keyboard for an electronic device, comprising a plurality of illuminateable keys, wherein each key is linked to at least one function, wherein the keyboard has at least one illuminating device for selectively emitting at least one out of two or more colours, said illuminating device being adapted for illuminating one or simultaneously two or more keys of said keyboard.

The at least one illuminating device can selectively emit at least one out of two or more colours. That means the illuminating device changes between at least two colours for illuminating the keys of the keyboard. For example, the illuminating device can change between a green and an orange illumination of the keys. The illuminating device is further being adapted for illuminating one or simultaneously two or more keys of said keyboard. This makes it possible to illuminate a group or an area of keys, i.e. a row or a column of keys, of a keyboard with a specific colour. Under normal condition it is known to take a call by pressing one specific key, which is often illuminated with a green light. The inventive keyboard makes it possible that a certain group of keys is illuminated for example with green light, when a call is coming. The user can take the call by pressing one of the keys of the group of illuminated keys, for example the green illuminated keys. The illumination of the keys can be made depending on a specific function. This makes it much easier for a user to press the correct key with the desired function. The user can press one of several same illuminated keys, because they have all the same function. The illuminating device of the keyboard enables for each function a different illumination of a group of keys. After taking the phone call the illumination of the keys or a group of keys and the function of these illuminated keys can change. Therefore the function of former green illuminated keys can change in that way that pressing one of these keys breaks the call. The illumination of the group of keys can change therefore from green illumination to red illumination, for example.

Preferred is an illumination, whereby the keys of the keyboard are backlighted by the illuminating device.

This kind of keyboard makes the operating of keyboards much easier for a user. The illuminating device can emit a specific colour to a specific group of keys for illuminating this group of keys simultaneously. This group of keys, illuminated with the same colour, can be provided with the same function. Therefore, a user of the keyboard can press instead of one key any of the illuminated keys of the group to execute a desired function. It is possible that some keys of the keyboard are illuminated with a first colour, a second group of keys is illuminated with a second colour and a further group of keys is illuminated with a third colour. Each key of one group has the same function. Therefore a user can choose between different keys of one group to execute the function of the key of the group.

According to a second aspect of the invention the problem is solved by an input device for an electronic device, whereby the input device has a keyboard comprising a plurality of illuminateable keys, wherein each key is linked to at least one function, comprising at least one illuminating device for selectively emitting at least one out of two or more colours, said illuminating device being adapted for illuminating one or simultaneously two or more keys of said keyboard, and whereby the input device has a control unit for controlling said at least one illuminating device, said control unit comprising means for determining the colour which is to be emitted from said at least one illuminating device, means for selecting the key or keys to be illuminated with the determined colour, means for activating the illuminating device and means for linking one function to the selected and illuminated key or keys.

The input device has a keyboard with at least one specific illuminating device and a control unit for controlling said at least one illuminating device. The control unit is assigned to the keyboard. The keyboard is skilled in the way described according to the first aspect of the invention. The control unit is able to control the at least one illuminating device of the keyboard. Therefore the control unit comprises means for determining the colour which is to be emitted from said at least one illuminating device. The control unit further comprises means for selecting the key or keys to be illuminated with the determined colour. These means selects the group of keys, i.e. a row or a column of keys, which should be illuminated with the determined colour.

After selecting a group of keys the means for activating the illuminating device activates the illumination device and the selected key or keys, respectively. The control unit further comprises means for linking one function to the selected and illuminated key or keys. These means makes it possible to link a certain group of keys with a specific function. An incoming phone call can be taken for example by pressing one key or more keys of a row of keys, which are all been illuminated with the same colour. Therefore the control unit couples a group of keys with a certain function. This coupling is depending on a certain status and situation of the electronic device, respectively. A group of keys can be illuminated with a first colour and can be linked with a first function and the same group of keys can be illuminated with a second colour and can be linked with a second function, if the status or the situation of the electronic device has changed. The status of the electronic device changes among others with the menu navigation. If the user pushes a certain key to get into a specific menu and if the next step in this menu has two alternatives, the means for determining the colour of the control unit selects two groups of keys. Then the means for activating the selected groups of keys activates the illumination device. After that the illumination device backlights the two groups of keys with different colours. The user has the possibility to push one of the keys of a group to get into the next menu point. Therefore, it is much easier for the user to push the correct key.

By using a number of different illuminating light colours or backlight colours for the keyboard, areas of the keyboard comprising a selection of neighbouring keys can be lit with the same colour and can be programmed with a prompt in an application so that a touch or press in the group of keys with the same colour will produce a response as though a single key has been pressed. Different colours can be assigned different meanings. In some cases the same colour may always have a specific meaning, e.g. green for "accept". In other cases the prompt, normally a display, of the electronic device will indicate the meaning of the colour.

Further an input device is preferred, whereby a storage device is assigned to the control unit, said storage device comprising a data list of different functions and a data list of different colours, said data lists being linked to each other. The control unit knows from the menu navigation which possible steps are provided to the user after the user has pushed a certain key. The control unit accesses the storage device and looks into the data list with the different functions. The control unit grabs the functions, which are possible at the point of the menu navigation. The means for selecting the keys selects groups of keys and the means for activating the selected keys activates the selected keys and the illuminating device, respectively. The illuminating device illuminates, in particular backlights, the selected groups of keys with the colour with is linked to each function.

Preferred is an input device, whereby the storage device further comprises a data list of a key or of two or more keys, said data list being linked to the data list of the different functions. The means for selecting a key or a group of keys to be emitted from the illuminating device selects from the data list a key or a group of keys. The key or the group of keys are linked to different functions. The means for activating the selected key or keys activates the illuminating device to illuminate the selected key or the group or keys of the keyboard.

According to a third aspect of the invention the problem is solved by an electronic device, in particular a mobile telephone device, whereby the electronic device comprises a keyboard or an input device like described before. The electronic device can be any device with a keyboard. For example, the electronic device can be a smart phone, a personal digital assistant, a notebook, in particular a sub-notebook, a mp3-player or the like. Preferred is the electronic device a mobile telephone device. This kind of electronic devices makes the operating of the electronic device much easier for a user. The possible steps of a menu navigation can be emphasised by illuminating a group of keys of the keyboard of the electronic device. The user of the electronic device will be directed very easy through the menu navigation of the electronic device. The different options of the menu navigation are emphasised by illuminating a group of keys with a certain colour. The control unit checks the next options in the menu navigation and selects a colour and a key or a group of keys which should be illuminated with the selected colour and with should be linked to a certain meaning and function, respectively. The user can pick a key out of the group of keys which are illuminated with the selected colour and which are linked with the specific function. After pressing one of the keys of the group of keys the function of the key will be executed by the electronic device. The user can choose between the illuminated keys of the group of keys for executing the linked function. The risk to press a wrong key can be nearly eliminated.

Preferred is an electronic device with a prompt device for indicating the meaning of the function of the illuminated key or keys. The user can see on the prompt device the meaning of the illuminated group of keys. That is advantageous, because there are keys within the group which have normally a different meaning. The prompt device indicates the colour of the key or the group of keys and the meaning of this key or group of keys. The user can recognise very easily that pressing one or more of the keys of the group of keys will execute the linked function of the key or keys. For example, the prompt device can indicate: "All red illuminated keys stops the phone call" or "all yellow illuminated keys stores the telephone number of the caller".

According to the last aspect of the invention the problem is solved by a method for illuminating keys of an electronic device, comprising a number of illuminateable keys, wherein each key is linked to at least one function, whereby at least one illuminating device illuminates one key or simultaneously two or more keys of the electronic device, wherein the at least one illuminating device is adapted for selectively emitting two or more colours; a control unit controls the at least one illuminating device, wherein the control unit determines the colour which is emitted from the at least one illuminating device, wherein the control unit selects the key or keys to be illuminated with the determined colour and activates the illuminating device for illuminating the selected key or keys; and means links one function to the selected and illuminated key or keys.

The illuminating device illuminates one key or simultaneously two or more keys of the electronic device. Advantageously, the illuminating device backlights the keys of the keyboard. The control unit controls the at least one illuminating device. Therefore the control unit determines the colour which is emitted from the at least one illuminating device. The control means further selects the key or keys to be illuminated with the determined colour. After selecting the key or the group of keys means for activating the illuminating device activates the illuminating device for illuminating the selected key or keys. Finally linking means links one function to the selected and illuminated key or keys. This method makes the operating of an electronic device, like a mobile phone, a personal digital assistant, a smart phone, a mp3-player or the like, much easier for a user than a normal electronic device. The user can choose between several keys to execute a certain function in the menu navigation of the electronic device.

Preferred is a method, whereby a data list of different functions and a data list of different colours, which are stored by a storage device, which is assigned to the control unit, are linked to each other, and/or whereby a data list of a key or of two or more keys, which is stored by the storage device, is linked to the data list of the different functions. The control unit and the means for selecting, respectively, can select a key or a group of keys out of the data list. The selected key or the selected group of keys are illuminated by the illuminating device of the keyboard. The selected key or the selected group of keys of the data list are linked to the data list of the different functions. Means for determining the colour which is to be emitted from the illuminating device chooses a colour, which is used for illuminating the selected group of keys.

Further a method is preferred, whereby a prompt device of an electronic device indicates the meaning of the function of the illuminated key or keys. The prompt device is advantageously a display of the electronic device. The user of the electronic device can see the meaning of the illuminated group or groups of keys. The user can press any key of the illuminated group of keys to execute the function, which is linked to the group. The prompt device can indicate the meaning of several different groups of keys, which are illuminated each by different colours. The prompt device can indicate that pressing keys illuminated "green" makes a first menu step, pressing keys illuminated "blue" makes a second menu step and pressing keys illuminated "red" makes a third alternative menu step.

Features and advantages described with respect to the inventive method also apply to the keyboard, the input means and the electronic device, respectively, and vice versa.

The invention will now be described again in detail with reference to the enclosed figures, wherein:
- Figure 1: shows a keyboard of a mobile telephone;
- Figure 2: shows a keyboard with three different illuminated groups of keys;
- Figure 3: shows a keyboard with two different illuminated groups of keys;
- Figure 4: shows a keyboard with two different illuminated groups of keys;
- Figure 5: shows a keyboard with three different illuminated groups of keys;
- Figure 6: shows a keyboard with six different illuminated groups of keys;

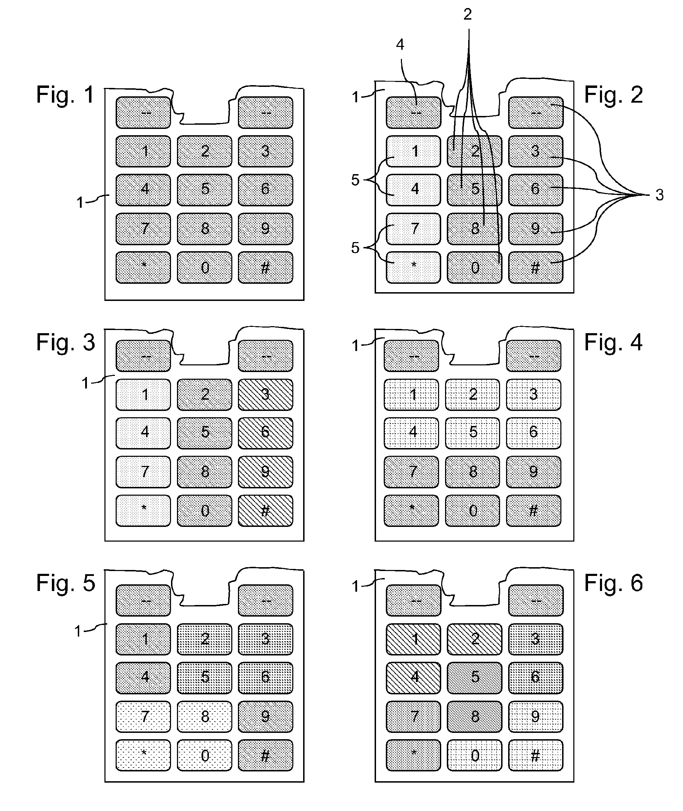

Fig. 1 shows a keyboard 1 of a mobile telephone. All keys of this keyboard 1 are illuminated with the same colour. In fig. 2 the keys 2 in the middle column, the keys in the right column 3 and the upper key 4 of the left column are illuminated with the same colour. All further keys 5 of the left column are illuminated with a first different colour. With the control over the back lit individual keys an application can programme the keyboard in areas to respond to a key press in any way the application requires. This is particularly useful for people lacking fine motor control as they have only to hit any key in a specific coloured area. Therefore, a user of the keyboard can press any of the four keys 5 of the left column to execute one function, which is assigned to all four keys 5 of the left column. By pressing one of the same coloured keys 2, 3, 4 the user can execute an alternative function. The user can press any one of the some coloured keys 5 to execute one and the same function. This makes it much easier for the user to press the correct key.

The fig. 3 to 6 show keyboards 1, in which two ore more parts of the keys are coloured with different colours. All keys of a part have the same function. In fig. 3 and 4 three and two areas of keys are illuminated with different colours. This is indicated by the different shading of the keys. In fig. 5 are the keys with the numeration "--", "1 ", "4", "7" and "#" illuminated with a first colour, the keys with the numeration "2", "3", "5" and "6" are illuminated with a second colour and the keys with the numeration "7", "8", "*" and "0" are illuminated with a third colour. Fig. 6 shows an illumination of the keyboard, wherein the keys are divided into six different illuminated areas, wherein all six areas are linked to a different function and meaning, respectively.

## Claims

1. Keyboard for an electronic device, comprising a plurality of illuminateable keys, wherein each key is linked to at least one function, **characterized by** at least one illuminating device for selectively emitting at least one out of two or more colours, said illuminating device being adapted for illuminating one or simultaneously two or more keys of said keyboard (1).

2. Input device for an electronic device, **characterized by** a keyboard (1) according to claim 1 and a control unit for controlling said at least one illuminating device, said control unit comprising means for determining the colour which is to be emitted from said at least one illuminating device, means for selecting the key or keys to be illuminated with the determined colour, means for activating the illuminating device and means for linking one function to the selected and illuminated key or keys.

3. Input device according to claim 1, **characterized in that** a storage device is assigned to the control unit, said storage device comprising a data list of different functions and a data list of different colours, said data lists being linked to each other.

4. Input device according to claim 2, **characterized in that** the storage device further comprises a data list of a key or of two or more keys, said data list being linked to the data list of the different functions.

5. Electronic device, in particular a mobile telephone device, **characterized in that** the electronic device comprises a keyboard (1) according to claim 1.

6. Electronic device, in particular a mobile telephone device, **characterized in that** the electronic device comprises an input device according to one of the claims 2 to 4.

7. Electronic device according to claim 6, **characterized in that** the electronic device comprises a prompt device for indicating the meaning of the function of the illuminated key or keys.

8. Method for illuminating keys of an electronic device, comprising a number of illuminateable keys, wherein each key is linked to at least one function, **characterized in that** at least one illuminating device illuminates one key or simultaneously two or more keys of the electronic device, wherein the at least one illuminating device is adapted for selectively emitting two or more colours; a control unit controls the at least one illuminating device, wherein the control unit determines the colour which is emitted from the at least one illuminating device, wherein the control unit selects the key or keys to be illuminated with the determined colour and activates the illuminating device for illuminating the selected key or keys; and means links one function to the selected and illuminated key or keys.

9. Method according to claim 6, **characterized in that** a data list of different functions and a data list of different colours, which are stored by a storage device, which is assigned to the control unit, are linked to each other.

10. Method according to claim 7, **characterized in that** a data list of a key or of two or more keys, which is stored by the storage device, is linked to the data list of the different functions.

11. Method according to claim 6 to 8, **characterized in that** a prompt device of an electronic device indicates the meaning of the function of the illuminated key or keys.
